# NEUE EUROPÄISCHE PATENTSCHRIFT

(11) **EP 0 835 881 B2**
(45) Veröffentlichungstag und Bekanntmachung des Hinweises auf die Entscheidung über den Einspruch: **29.12.2004**
(45) Hinweis auf die Patenterteilung: 21.02.2001
(21) Anmeldenummer: 97117105.3
(22) Anmeldetag: 02.10.1997
(51) Int. Cl.: C08B 11/20, C08J 3/12

(54) **Verfahren zur Herstellung von Methylcellulose-Pulvern mit spezieller Sieblinie**
Process for preparing methylcellulose powder with special granulometric distribution
Procédé de préparation de poudre de méthylcellulose possédant une distribution granulométrique spéciale

(30) Priorität: 14.10.1996 DE 19642327
(43) Veröffentlichungstag der Anmeldung: 15.04.1998
(73) Patentinhaber: WOLFF WALSRODE AG, 29655 Walsrode (DE)
(72) Erfinder: Sonnenberg, Gerd, 29664 Walsrode (DE); Herzog, Dieter, Dr., 29664 Walsrode (DE); Kranz, Bernhard, 29664 Walsrode (DE); Pawlowski, Kurt, 29699 Bomlitz (DE)
(74) Vertreter: Feldhues, Michael L.F., Dr.

(56) Entgegenhaltungen:
- EP-A- 0 049 815
- EP-A- 0 227 008
- EP-A- 0 676 416
- DE-A- 2 458 998
- GB-A- 2 262 527
- US-A- 4 076 935
- US-A- 4 747 550
- US-A- 4 820 813
- US-A- 4 979 681
- Informationsblatt "Ultra-Rotor" von Altenburger Maschinen

## Beschreibung

Die vorliegende Erfindung betrifft ein Verfahren zur Herstellung von Methylcellulose-Pulvern, bei denen eine bestimmte Sieblinie vorliegt.

Bei der Herstellung von Methylcellulose wird - um eine verbesserte Verarbeitung zu erzielen - für jede Anwendung ein bestimmtes Kornverteilungsspektrum (Sieblinie) angestrebt. Dieses Verteilungsspektrum soll im geforderten Fall etwa so beschaffen sein, daß der Hauptanteil kleiner als 0,16 mm ist, etwa die Hälfte soll kleiner als 0,10 bis 0,12 mm sein und der Feinanteil soll mit 15 bis 30 % unter ca. 0,06 mm liegen.

Es sind zahlreiche Verfahren zur Zerkleinerung und Mahlung von Celluloseethern bekannt.

Eine Grobzerkleinerung kann in einer Schneidmühle erfolgen. Dabei fällt normalerweise ein grobes, wolliges, d.h. langfaseriges Produkt mit niedrigem Schüttgewicht an.

Ein weiteres Verfahren (US 2 176 678) ist bekannt, in dem flockenförmige Celluloseether zwischen einer stehenden und einer rotierenden Platte geschert werden, so daß sich kleine Faserbündel bilden.

Nach einem anderen Verfahren (DE 1 454 B24) erzeugt man ein Vlies aus Celluloseethern durch Friktionieren in Walzen, welches anschließend gebrochen und in Stiftmühlen oder Prallzerspanern gebrochen wird. Mit diesem Verfahren sind nur relativ grobkömige Produkte zu erhalten.

Weiterhin ist ein Verfahren bekannt (FR-A 1 581 954), bei denen die Celluloseether zu Schuppen gepreßt und anschließend in einem Pulverisator zerkleinert werden. Die dabei erhaltenen Pulver sind mit einer Teilchengröße kleiner als 0,124 mm sehr fein.

Darüber hinaus gibt es Verfahren für die Herstellung von Celluloseether-Feinpulvern mit Teilchengrößen von etwa 90 % kleiner als 0,100 mm. Diese basieren auf dem Einsatz von Kugel- oder Schwingmühlen (DE-B 24 58 998 = US-A 4 076 935 und DE-B 25 56 B21).

Ein weiteres Verfahren ist bekannt zur Mahlung insbesondere von hochviskosen Celluloseethern unter Verwendung einer Hochdrehzahl-Luftstrom-Rotationsprallmühle zu Teilchengrößen von 0,4 bis 0,035 mm (EP 384 046 B1). Fernerhin sind zweistufige Mahlverfahren bekannt, die zunächst eine Versprödung des Celluloseethers durch eine Schwing- oder Kugelmühle, bevorzugt in gekühlter Ausführung, oder eine Pelletpresse durchführen, um anschließend das vorbehandelte Material in einer Strahlmühle zu zerkleinern. Dabei werden jedoch Produkte erhalten, die eine Feinheit von mindestens 98 % unter 0,100 mm besitzen (EP 049 815 B2). Alle diese obengenannten Verfahren führen nicht zu den gewünschten Produkten mit der unten beschriebenen gesuchten Sieblinien.
Die Herstellung von Produkten mit der gesuchten Sieblinie, die besonders vorteilhaft in Systemen eingesetzt werden können, die ein definiertes Auflöseverhalten des Celluloseethers erfordern, wie z.B. in der Bauindustrie für Spachtelmassen oder Fliesenkleber war bislang nur durch fraktioniertes Sieben und anschließendes Zusammenmischen der entsprechenden Fraktionen möglich. Nachteilig an diesem Verfahren ist der hohe zeitliche und apparative Aufwand und der immer anfallende Rückstand an nicht brauchbaren Fraktionen. Insbesondere dieser Rückstand macht diese Verfahrensweise unwirtschaftlich.

Aufgabe der vorliegenden Erfindung war es daher, ein Zerkleinerungsverfahren zur Verfügung zu stellen, das ein Produkt mit etwa folgender Sieblinie ergibt

| | |
|---|---|
| 100 % | <0,250 mm |
| 99-100 % | <0,200 mm |
| 97-100 % | <0,160 mm |
| 55-70 % | <0,125 mm |
| 35-50 % | <0,100 mm |
| 15-30 % | <0,063 mm |

Das Verfahren ist dadurch gekennzeichnet, daß ein Methylcellulose- oder ein Methylhydroxyalkylcellulose-Granulat mit einer Feinheit von 100 % = kleiner als 0,8 mm und mit einem Feuchtigkeitsgehalt von 5 bis 15% mit Wasser bis zu einem Feuchtigkeitsgehalt von 30 bis 70 % eingestellt, anschließend in einem Ultra-Rotor eine Umfangsgeschwindigkeit von 50 bis 120 m/s, gemahlen, anschließend in einer Abscheidevorrichtung die Luft vom Celluloseether getrennt und zur Klassierung Schwingsieben, bestehend aus einem oder mehreren Trennsieben mit ca. 0.14 bis 0,16 mm Maschenweite, zugeführt wird.

Mit dem erfindungsgemäßen Verfahren steht nun erstmals ein Verfahren zur Zerkleinerung von Celluloseethern, insbesondere MHEC, MHPC und MC zur Verfügung, mit dem in wirtschaftlicher Weise gezielt die im folgenden beschriebene Sieblinie hergestellt werden kann:

| | |
|---|---|
| 100 % | <0,250 mm |
| 99-100 % | <0,200 mm |
| 97-100% | <0,160 mm |
| 55-70 % | <0,125 mm |
| 35-50 % | <0,100 mm |
| 15-30 % | <0,063 mm |

Celluloseether mit dieser Sieblinie werden besonders vorteilhaft für die Herstellung von Baustoffen verwendet, bei denen ein definiertes Auflöseverhalten gewünscht wird. Durch dieses definierte Auflöseverhalten wird die Wirkungsfreisetzung des Celluloseethers gesteuert. Dieses ist insbesondere bei Spachtelmassen oder Fliesenklebern von hoher Qualität von Vorteil.

Die zu zerkleinernden Celluloseether sind Methylcellulosen (MC), Methylhydroxyethyl-cellulose (MHEC), und Methyl-hydroxypropyl-cellulose (MHPC) mit einem Substitutionsgrad Methoxyl (DS) von 1,2 bis 2,2, bevorzugt 1,35 bis 1,85, besonders bevorzugt 1,45 bis 1,7 und gegebenenfalls einem Substitutionsgrad Hydroxyalkyl (MS) von 0,1 bis 0,6, bevorzugt 0,2 bis 0,4, besonders bevorzugt 0,25 bis 0,35. Diese Celluloseether sind in Wasser löslich und zeigen in einer 2 gew.-%igen (lutro) wäßrigen Lösung eine Viskosität von 100 bis 100 000 mPa·s, bevorzugt 500 bis 80 000 mPa·s, besonders bevorzugt 3000 bis 50 000 mPa·s; gemessen in einem Viskosimeter vom Typ Rotovisko bei einem Schergefälle von 2,51 /s und einer Temperatur von 20°C. Das Schüttgewicht beträgt am Eingang des Verfahrens 220 bis 500 g/l, bevorzugt 250 bis 350 g/l. Die Feuchte beträgt am Eingang des Verfahrens 5 bis 15 %, bevorzugt 7 bis 12 %. Der Gehalt an NaCl beträgt: 0 bis 5 %, bevorzugt 0 bis 3 %.

Die Sieblinie dieser Celluloseethergranulate entspricht am Eingang des Verfahrens der im folgenden dargestellten Sieblinie:

| | |
|---|---|
| 100 % | <0,800 mm |
| 95 bis 100 % | <0,630 mm |
| 40 bis 60 % | <0,315 mm |
| 30 bis 45 % | <0,250 mm |
| 20 bis 30 % | <0,200 mm |
| 15 bis 22 % | <0,160 mm |
| 7 bis 15 % | <0,100 mm |
| 1 bis 10 % | <0,063 mm |

Überraschenderweise zeigte sich, daß die obengenannten Celluloseethergranulate durch Zugabe von kaltem Wasser in einem Doppelschnecken-Gegenstrommischer und anschließender Prallzerkleinerung, in einem Ultra-Rotor, mit nachfolgender Klassierung über Schwingsieb in der nachfolgend beschriebenen Verfahrensweise direkt zu dem gewünschten Endprodukt mit der geforderten Sieblinie führen.

Das erfindungsgemäße Verfahren wird beispielhaft wie folgt ausgeführt Abweichungen bzw. Anpassungen sind selbstverständlich möglich und stehen im Ermessen des Fachmanns.

Zu Beginn des erfindungsgemäßen Verfahrens wird der Celluloseether in einen Doppelschnecken-Gegenstrommischer mit einem Volumen von z.B. 3 cbm gegeben. Der Drehzahlbereich des Mischwerkes liegt bei 5 bis 20 Upm. Zur Zugabe von Wasser ist der Mischer innen mit drei Zweistoffbreitstrahldüsen ausgerüstet

Es werden 600 kg des Celluloseether-Granulates in einen Doppelschneckenmischer gegeben und über drei Zweistoffbreitstrahldüsen werden innerhalb von 15 bis 30 Minuten 300 l bis 400 l Wasser mit einer Temperatur von 5 bis 40°C, bevorzugt 7 bis 30°C, zugegeben. Das dabei erhaltene Granulat bleibt überraschenderweise rieselfähig und es gibt keine Klumpen, die zu Verstopfungen in den Anlagen oder in der nachfolgenden Mühle führen. Nach Ende der Wasserzugabe wird weitere 10 Minuten gemischt und dann wird der zu vermahlende Celluloseether in die Mühle gefahren. Die Zugabemenge beträgt dabei 50 bis 150 kg pro Stunde, bevorzugt 70 bis 90 kg pro Stunde, bezogen auf das erhaltene Endprodukt.

Als Mühle wird ein Ultra-Rotor verwendet. Der Ultra-Rotor ist eine Hochleistungsprallmühle mit Umfangsgeschwindigkeiten von bis zu 120 m/s. Der Antrieb besteht aus einem 250 kW Drehstrommotor und treibt den Rotor mittels Keilriemenantrieb an. Der Rotor besteht aus 7 Schleudertellern, die im erfindungsgemäßen Verfahren wechselweise mit Turbolisatoren und Prallplatten bestückt ist. Der Außenmantel ist mit zum Mahlraum geriffelten Platten ausgerüstet. Für die Rückführung von unzerkleinertem Produkt ist der Ultra-Rotor mit einem Fingersichter ausgerüstet. Zur Kühlung und dem gleichzeitigen Transport des Produktes durch die Mühle wird das Aggregat mit 6000 bis 8000 cbm Luft pro Stunde durchströmt.

In dem erfindungsgemäßen Verfahren wird das aus der Mühle tretende Gemisch von Luft und zerkleinertem Celluloseether in einem Zyklon voneinander getrennt. Die den Zyklon entweichende Abluft wird durch ein Filter gereinigt. Der im Zyklon anfallende Celluloseether wird auf zwei Schwingsiebe verteilt. Zur Klassierung werden Schwingsiebe mit hohem Abscheidegrad eingesetzt. Die Siebe haben einen Durchmesser von 2 m und werden mit Trennsieben mit Siebgewebe der Maschenweiten 0,140 mm bis 0,160 mm, bevorzugt 0,150 mm bestückt. Dabei können die beiden Siebe mit gleichen oder unterschiedlichen Siebbestückungen der obengenannten Maschenweiten betrieben werden. Das auf den Sieben zurückgehaltene Grobkom wird dem Ultra-Rotor wieder zugeführt, während das Gutkom (Endprodukt) mit der erfindungsgemäßen Sieblinie aus der Anlage entnommen wird und in Big Bag oder Säcke abgefüllt wird.

### Beispiel 1

Es werden 600 kg MHEC (DS = 1,61; MS (EO) = 0,28; Feuchte: 13,1 %; NaCl = 1,5 %, Viskosität: 35 200 mPa·s; Sieblinie: 100 % <0,8 mm; 99,6 % <0,63 mm; 53,4 % <0,315 mm; 37,6 % <0,25 mm; 26,7 % <0,2 mm; 20,1 % <0,16 mm; 14,2 % <0,125 mm; 10,2 % <0,1 mm; 5 % <0,063 mm) in den Doppelschnecken-Gegenstrom-Mischer gegeben. Innerhalb von 25 min werden 350 l Wasser zugegeben und im Anschluß daran noch weitere 10 Minuten gemischt. Dann wird das Gemisch mit einer Leistung von 85 kg/h (bezogen auf das erhaltene Endprodukt) auf die Mühle gegeben. Die beiden Siebe sind mit 0,15 mm Siebgewebe bestückt. Die Eigenschaften des erhaltenen Produktes sind in Tabelle 1 dargestellt

In analoger Weise wurden die Beispiele 2 und 3 hergestellt. Auch hierfür sind die Eigenschaften des erhaltenen Produktes in Tabelle 1 dargestellt.

**Tabelle 1**

| Eigenschaft | Einheit | Ausgangsmaterial | Beispiel 1 | Beispiel 2 | Beispiel 3 |
|---|---|---|---|---|---|
| Feuchte | % | 5-15 | 3,8 | 3,7 | 2,6 |
| Schüttgewicht | g/l | 220-500 | 420 | 460 | 460 |
| Viskosität | mPa·s | 100-100 000 | 39 660 | 2800 | 12 660 |
| DS | | 1,2-2,2 | 1,61 | 1,62 | 1,87 |
| MS | | 0,1-0,6 | 0,28 (EO) | 0,32 (PO) | 0,22 (EO) |
| <0,8 mm | % | 100 | | | |
| <0,63 mm | % | 95-100 | | | |
| <0,315 mm | % | 40-60 | | | |
| <0,25 mm | % | 30-45 | 100 | 100 | 100 |
| <0,2 mm | % | 20-30 | 99,68 | 99,9 | 99,97 |
| <0,16 mm | % | 15-22 | 97,98 | 99 | 97,56 |
| <0,125 mm | % | 10-20 | 69,7 | 68,4 | 60,2 |
| <0,1 mm | % | 7-15 | 46,6 | 45,2 | 41,82 |
| <0,063 mm | % | 1-10 | 23,1 | 24,6 | 15,08 |

## Patentansprüche

1. Verfahren zur Herstellung von Methyl-hydroxyalkyl-cellulose (alkyl = ethyl bzw. propyl)- oder Methylcellulose-Pulvern mit folgender Sieblinie:
| | |
|---|---|
| 100 % | <0,250 mm |
| 99-100 % | <0,200 mm |
| 97-100 % | <0,160 mm |
| 55-70 % | <0,125 mm |
| 35-50 % | <0,100 mm |
| 15-30 % | <0,063 mm |
**dadurch gekennzeichnet, dass** ein Methylhydroxyalkylcellulose- oder Methylcellulose-Granulat mit einer Feinheit von 100 % = kleiner als 0,8 mm und mit einem Feuchtigkeitsgehalt von 5 bis 15 % mit Wasser bis zu einem Feuchtigkeitsgehalt von 30 bis 70 % eingestellt, anschließend in einer Rotationsmühle vom Typ eines Ultra-Rotors, deren Rotor eine Umfangsgeschwindigkeit von 50 bis 120 m/s aufweist, gemahlen, anschließend in einer Abscheidevorrichtung die Luft vom Celluloseether getrennt und zur Klassierung Schwingsieben, bestehend aus einem oder mehreren Trennsieben mit ca. 0,14 bis 0,16 mm Maschenweite, zugeführt wird.

## Claims

1. Process for producing methyl hydroxyalkyl cellulose powder (alkyl = ethyl or propyl) or methyl cellulose powder having the following particle-size distribution curve:
| | |
|---|---|
| 100 % | <0.250 mm |
| 99-100 % | <0.200 mm |
| 97-100 % | <0.160 mm |
| 55-70 % | <0.125 mm |
| 35-50 % | <0.100 mm |
| 15-30 % | <0.063 mm |
**characterised in that** a methyl hydroxyalkyl cellulose granular material or methyl cellulose granular material having a fineness of 100 % = less than 0.8 mm and having a moisture content of 5 to 15 % is adjusted by means of water to a moisture content of 30 to 70 %, then ground in a rotary mill of the ultra rotor type, the rotor of which has a peripheral speed of 50 to 120 m/s, then the air is separated from the cellulose ether in a separating device and the material is passed to vibrating screens, consisting of one or more separating screens having a mesh size of approximately 0.14 to 0.16 mm, for grading.

## Revendications

1. Procédé pour la préparation de poudres de méthylhydroxyalkyl-cellulose (le groupe alkyle représente un groupe éthyle, respectivement un groupe propyle) ou de méthylcellulose possédant la courbe granulométrique ci-après :
| | |
|---|---|
| 100 % | < 0,250 mm |
| 99-100 % | < 0,200 mm |
| 97-100 % | < 0,160 mm |
| 55-70 % | < 0,125 mm |
| 35-50 % | < 0,100 mm |
| 15-30 % | < 0,063 mm |
**caractérisé en ce qu'**on ajuste un produit de granulation de méthylhydroxyalkyl-cellulose ou de méthylcellulose avec une finesse, à concurrence de 100 %, inférieure à 0,8 mm et une teneur en humidité de 5 à 15 % avec de l'eau jusqu'à ce que l'on obtienne une teneur en humidité de 30 à 70 % ; qu'ensuite, on le broie dans un broyeur à rotation de type "Ultra-Rotor" dont le rotor présente une vitesse périphérique de 50 à 120 m/s; puis, qu'on sépare l'air de l'éther cellulosique dans un dispositif de séparation et qu'on l'achemine à des fins de classement à des cribles vibrants constitués par un ou plusieurs cribles de classement possédant une largeur de maille d'environ 0,14 à 0,16 mm.
